# EUROPEAN PATENT APPLICATION

(11) **EP 4 760 120 A1**
(43) Date of publication of application: **17.06.2026**
(21) Application number: 24851836.7
(22) Date of filing: 06.08.2024
(51) Int. Cl.: F16C 33/80, F16C 19/18, F16C 33/78, F16J 15/447, F16J 15/3232, F16J 15/3256

(54) **SEALING DEVICE**

(30) Priority: 10.08.2023 JP 2023131146
(71) Applicant: NOK Corporation, Minato-ku Tokyo 105-8585 (JP)
(72) Inventor: NAKAGAWA, Yuki, Fukushima-shi, Fukushima 960-1193 (JP)
(74) Representative: TBK
(86) International application number: PCT/JP2024/028021
(87) International publication number: WO 2025/033412

(57) **Abstract**

A hub seal (1) includes a seal main body (3) and a slinger (4). The seal main body (3) includes a reinforcement ring (10) and an elastic body portion (20). The slinger (4) includes a flange portion (31) and a tubular portion (32). An outer tubular surface (3a) as a tubular surface is formed in the seal main body (3). The elastic body portion (20) has a side lip (21) on an inner periphery side relative to the outer tubular surface (3a). The tubular portion (32) of the slinger (4) has a weir portion (33) which has an annular shape, is positioned on an outer periphery side relative to the side lip (21), and extends toward the outer periphery side, in an end portion on an inner side. The outer tubular surface (3a) faces, from the outer periphery side, the tubular portion (32). Between the outer tubular surface (3a) and an end (33a) of the weir portion (33), a first gap (S1) is formed whose width (W1) in a radial direction is narrower than a width (W2) of a second gap (S2) in the radial direction, the second gap (S2) being formed between the outer tubular surface (3a) and a portion which faces the outer tubular surface (3a) and is not the end (33a) of the weir portion (33).

## Description

### Technical Field

The present invention relates to a sealing device.

### Background Art

In a vehicle, for example, an automobile, in related art, a hub seal as a sealing device is mounted on a hub bearing, which rotatably supports a wheel, in order to seal a gap which is formed between an outer ring and an inner ring. The hub seal performs sealing for a lubricant in an internal portion of the hub bearing and prevents foreign matter from entering the internal portion. Because the hub bearing is in a harsh environment where it is directly exposed to foreign matter such as rain water, muddy water, and dust, an improvement in sealing performance against foreign matter has been demanded for the hub seal. Further, due to requests for low fuel consumption and so forth, reduction in sliding resistance (torque resistance) to be applied to the hub bearing by a seal lip has been demanded for the hub seal. It is possible to increase a seal lip for an improvement in sealing performance of the hub seal, but this leads to an increase in torque resistance of the hub seal. Thus, a hub seal has been suggested in which a labyrinth seal is formed with a slinger and sealing performance against foreign matter is thereby improved without increasing torque resistance of the hub seal (for example, see Patent Literature 1).

### Citation List

### Patent Literature

Patent Literature 1
Japanese Patent Laid-Open No. 2010-91036

### Summary of Invention

### Technical Problem

As described above, because a hub bearing is used in a harsh environment where it is directly exposed to foreign matter such as rain water, muddy water, and dust, even with such a hub seal having a labyrinth seal as disclosed in Patent Literature 1, foreign matter might enter from the labyrinth seal. In particular, liquid foreign matter such as rain water, muddy water, rain water or muddy water which contains dust might enter from the labyrinth seal. Thus, for the hub seal, a further improvement in sealing performance against liquid foreign matter has been demanded. Thus, for a sealing device that is applied to an article used in a harsh environment with respect to entry of liquid foreign matter, such as a hub bearing, a configuration has been demanded which can improve sealing performance against liquid foreign matter.

The present invention has been made in consideration of the above-described problem, and an object thereof is to provide a sealing device that can improve sealing performance against liquid foreign matter.

### Solution to Problem

To achieve the above object, a sealing device according to the present invention is a sealing device for sealing a gap between an outer periphery side member and an inner periphery side member which is at least partially surrounded by the outer periphery side member, the outer periphery side member and the inner periphery side member being relatively rotatable with respect to each other about an axis line, the sealing device including: a sealing device main body that is fixed to the outer periphery side member; and a slinger that is fixed to the inner periphery side member, in which the sealing device main body includes a reinforcement ring that is annular around the axis line and an elastic body portion that is mounted on the reinforcement ring and is formed with an elastic body which is annular around the axis line, the slinger includes a circular ring portion as a portion which is annular around the axis line and extends in a radial direction and a tubular portion as a portion which has a tubular shape and extends along the axis line from an end portion of the circular ring portion on an outer periphery side toward one side in the axis line direction, an outer tubular surface as a tubular surface which is annular around the axis line and extends along the axis line is formed in the sealing device main body, the elastic body portion has a side lip, which extends toward another side in the axis line direction and contacts the slinger, on an inner periphery side relative to the outer tubular surface, the tubular portion of the slinger is positioned on the outer periphery side relative to the side lip, the tubular portion of the slinger has, in an end portion on the one side, a weir portion as an annular portion which extends toward the outer periphery side, the outer tubular surface of the sealing device main body faces, from the outer periphery side, at least a part of the tubular portion of the slinger which includes an end of the weir portion, and between the outer tubular surface and the end of the weir portion, a first gap is formed which is narrower than a width of a second gap in the radial direction, the second gap being provided between the outer tubular surface and a portion of the tubular portion, which faces the outer tubular surface and is not the end of the weir portion.

In the sealing device according to one aspect of the present invention, the width of the first gap in the radial direction is set to a width which forms a labyrinth seal against liquid foreign matter, and the width of the second gap in the radial direction is set to a width which does not form the labyrinth seal against the liquid foreign matter.

The sealing device according to one aspect of the present invention, is configured to enable foreign matter flowing into the second gap to be discharged from the second gap.

In the sealing device according to one aspect of the present invention, the weir portion has a weir surface as a surface which extends from the end to the inner periphery side, is annular around the axis line, and faces the other side, and the tubular portion has an inner tubular surface as a tubular surface which extends from an end of the weir surface on the inner periphery side to the other side and faces the outer periphery side.

In the sealing device according to one aspect of the present invention, the inner tubular surface of the tubular portion increases in diameter as progresses toward the one side in the axis line direction.

In the sealing device according to one aspect of the present invention, the end of the weir portion is a surface which is annular around the axis line and faces the outer periphery side.

In the sealing device according to one aspect of the present invention, the elastic body portion forms the outer tubular surface.

In the sealing device according to one aspect of the present invention, the elastic body portion has an intermediate lip, which extends toward the slinger, on the inner periphery side relative to the side lip.

In the sealing device according to one aspect of the present invention, the elastic body portion has a grease lip which extends from the one side relative to the intermediate lip and contacts the slinger.

In the sealing device according to one aspect of the present invention, the one side is an inner side, and the sealing device is an outer-side sealing device.

In the sealing device according to one aspect of the present invention, the one side is an outer side, and the sealing device is an inner-side sealing device.

### Advantageous Effect of Invention

A sealing device according to the present invention can improve sealing performance against liquid foreign matter.

### Brief Description of Drawings

[Fig. 1] Fig. 1 is a cross-sectional view illustrating a cross section of a hub bearing as one example along a plane including an axis line of the hub bearing.
[Fig. 2] Fig. 2 is a partially enlarged cross-sectional view of the vicinity of a hub seal according to a first embodiment of the present invention in Fig. 1.
[Fig. 3] Fig. 3 is a partially enlarged cross-sectional view of the hub seal in Fig. 2.
[Fig. 4] Fig. 4 is a cross-sectional view of a modification example of the hub seal illustrated in Fig. 2.
[Fig. 5] Fig. 5 is a partially enlarged cross-sectional view of another modification example of the hub seal illustrated in Fig. 2.
[Fig. 6] Fig. 6 is a partially enlarged cross-sectional view of the vicinity of a hub seal according to a second embodiment of the present invention in Fig. 1.
[Fig. 7] Fig. 7 is a partially enlarged cross-sectional view of the hub seal in Fig. 6.
[Fig. 8] Fig. 8 is a cross-sectional view of a modification example of the hub seal illustrated in Fig. 6.

### Description of Embodiments

Embodiments of the present invention will hereinafter be described with reference to the drawings.

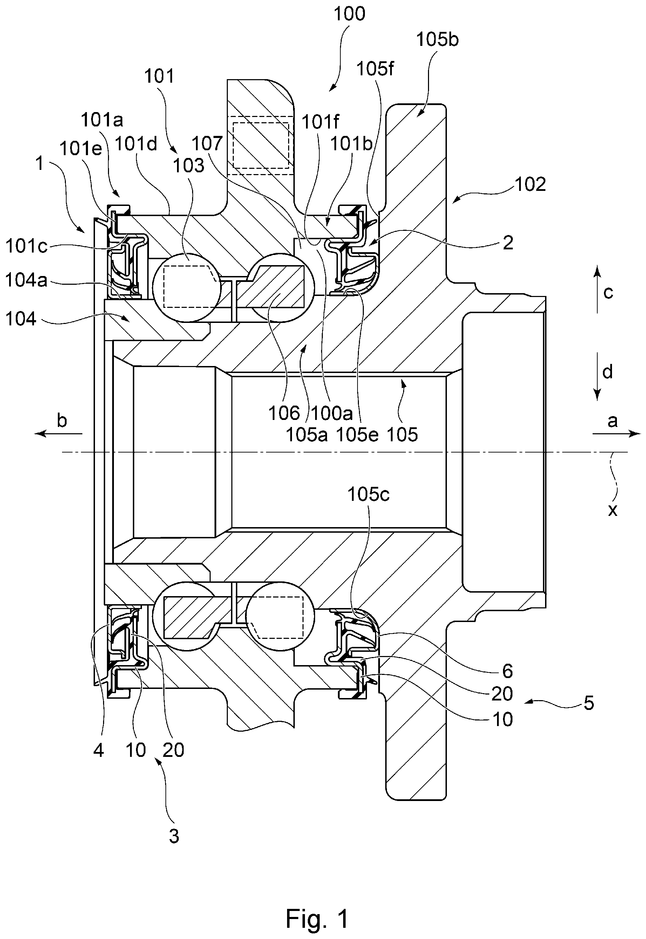

A sealing device according to the present invention is a sealing device that seals a gap between an outer periphery side member and an inner periphery side member, which are relatively rotatable with respect to each other about an axis line. The inner periphery side member is at least partially surrounded by the outer periphery side member. The sealing device according to the present invention is applied to a hub bearing, for example. Fig. 1 is a cross-sectional view illustrating a cross section of a hub bearing 100 as one example along a plane including an axis line of the hub bearing 100. As illustrated in Fig. 1, the hub bearing 100 is a hub bearing which has been known in related art, is provided in a vehicle or the like such as an automobile, and rotatably supports a wheel on an axle or a suspension device. Note that the sealing device according to the present invention is not limited to a hub seal, and an application target of the sealing device according to the present invention is not limited to a hub bearing.

Specifically, as illustrated in Fig. 1, the hub bearing 100 includes an outer ring 101, as an outer periphery side member, which is annular and has an axis line x as a central axis or a generally central axis, an inner ring 102, as an inner periphery side member, which is relatively rotatable with respect to the outer ring 101, is partially surrounded by the outer ring 101, and has the axis line x as a central axis or a generally central axis, and a plurality of bearing balls (rolling elements) 103 which are disposed between the outer ring 101 and the inner ring 102. In a usage state of the hub bearing 100 mounted on a vehicle or the like, the outer ring 101 is fixed, and the inner ring 102 becomes relatively rotatable with respect to the outer ring 101. Specifically, the inner ring 102 has an inner ring member 104 and a hub ring 105, and the hub ring 105 has a shaft portion 105a which is tubular or generally cylindrical and extends along the axis line x and a wheel-mounting flange 105b. The wheel-mounting flange 105b is a portion which expands in a disk shape from one end of the shaft portion 105a on an outer side toward an outer periphery side and is a portion on which a brake disk rotor and a tire wheel, which are not illustrated, are mounted by a plurality of hub bolts (not illustrated). The shaft portion 105a and the wheel-mounting flange 105b are smoothly connected on an inner periphery side, and a transition portion 105c as a portion in which the shaft portion 105a and the wheel-mounting flange 105b are connected on the inner periphery side has a contour which delineates a smooth curve having a circular arc shape or arc shape in a cross section along a plane including the axis line x. In order to retain the bearing balls 103 in a gap 100a between the outer ring 101 and the inner ring 102, the inner ring member 104 is fitted into an end portion, on an inner side, of the shaft portion 105a of the hub ring 105. In the gap 100a between the outer ring 101 and the inner ring 102, the bearing balls 103 are retained by a retainer 106.

The outer ring 101 has a through hole 107 extending in an axis line x direction, the shaft portion 105a of the hub ring 105 of the inner ring 102 is inserted into the through hole 107, and the gap 100a which is annular and extends along the axis line x is formed between the shaft portion 105a and the through hole 107. In the gap 100a, as described above, the bearing balls 103 are housed and retained by the retainer 106, and coating with or injection of a lubricant is performed. A sealing device 1 is mounted on an inner side opening portion 101a of the outer ring 101, which forms an opening through which the gap 100a between the inner ring member 104 and shaft portion 105a, and the through hole 57 opens on the inner side. On the other hand, a sealing device 2 is mounted on an outer side opening portion 101b of the outer ring 101, which forms an opening through which the gap 100a opens on the outer side.

The sealing device 1 is a sealing device according to a first embodiment of the present invention and is an inner-side hub seal. On the other hand, the sealing device 2 is a sealing device according to a second embodiment of the present invention and is an outer-side hub seal. The sealing devices 1 and 2 seal the gap 100a between the shaft portion 105a of the hub ring 105 and the inner ring member 104, and the outer ring 101, prevent leakage of the lubricant in the gap 100a to an outside, and prevent entry of foreign matter such as rain water, muddy water, and dust from the outside into the gap 100a. Note that a configuration of a hub bearing to which the sealing devices 1 and 2 are applied is not limited to a configuration of the above-described hub bearing 100. In the following description, a sealing device to be applied to the hub bearing will also be referred to as a hub seal.

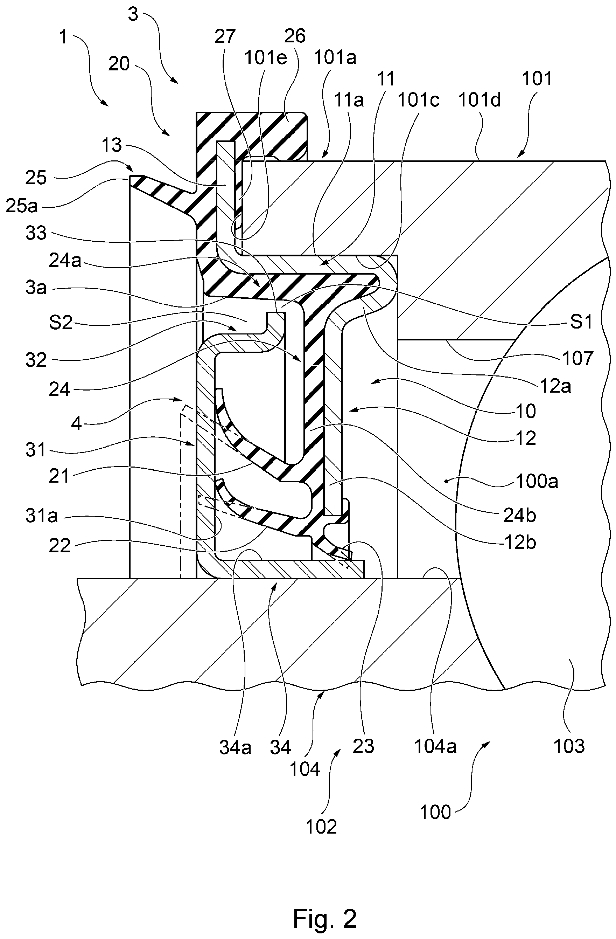

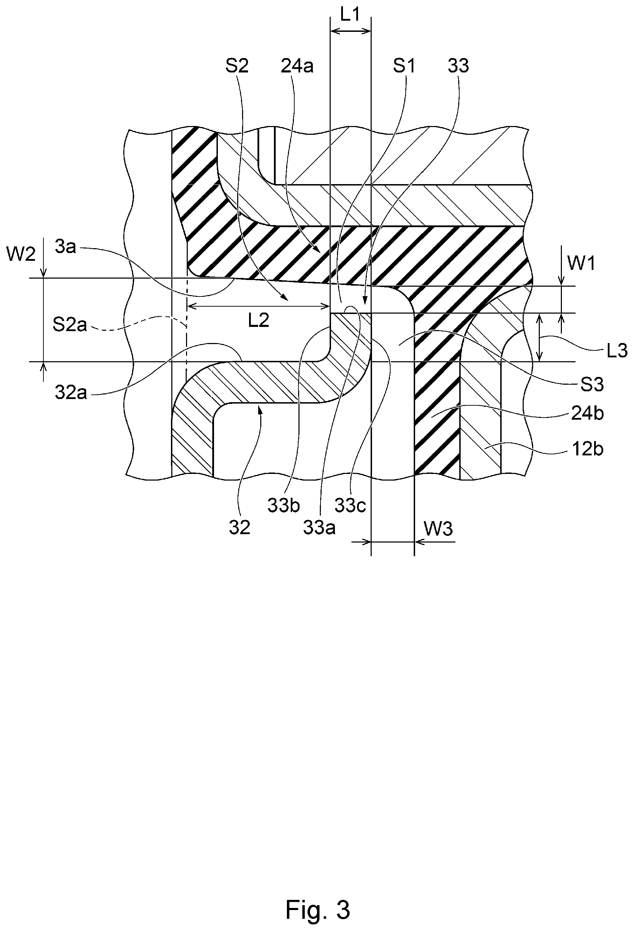

Next, a hub seal 1 according to the first embodiment of the present invention will be described. Fig. 2 is a partially enlarged cross-sectional view of the vicinity of the hub seal 1 in Fig. 1, and Fig. 3 is a partially enlarged cross-sectional view of the hub seal 1 in Fig. 2. Fig. 2 illustrates one side, with respect to the axis line x, of a cross section along a plane including the axis line x, of the hub seal 1 in the usage state where the hub seal 1 is mounted on the hub bearing 100. Note that in the usage state of the hub seal 1, a seal main body 3 and a slinger 4 are mounted on the hub bearing 100 so as to be set to predetermined relative positions.

As illustrated in Figs. 2 and 3, the hub seal 1 includes the seal main body 3 as a sealing device main body to be fixed to the outer ring 101 and the slinger 4 to be fixed to the inner ring 102. The seal main body 3 includes a reinforcement ring 10 that is annular around the axis line x and an elastic body portion 20 that is mounted on the reinforcement ring 10 and is formed with an elastic body which is annular around the axis line x. The slinger 4 includes a flange portion 31 as a circular ring portion that is a portion which is annular around the axis line x and extends in a radial direction and a tubular portion 32 as a portion that has a tubular shape and extends along the axis line x from an end portion of the flange portion 31 on the outer periphery side toward one side (outer side) in the axis line x direction. In the seal main body 3, an outer tubular surface 3a as a tubular surface is formed which is annular around the axis line x and extends along the axis line x. On the inner periphery side relative to the outer tubular surface 3a, the elastic body portion 20 has a side lip 21 which extends toward another side (inner side) in the axis line x direction and contacts the slinger 4. The tubular portion 32 of the slinger 4 is positioned on the outer periphery side relative to the side lip 21. The tubular portion 32 of the slinger 4 has, in an end portion on the outer side, a weir portion 33 as an annular portion which extends toward the outer periphery side. The outer tubular surface 3a of the seal main body 3 faces, from the outer periphery side, at least a part of the tubular portion 32 of the slinger 4 which includes an end 33a of the weir portion 33. Between the outer tubular surface 3a and the end 33a of the weir portion 33, a first gap S1 is formed which has an annular shape and whose width W1 in the radial direction is narrower than a width W2 of a second gap S2 in the radial direction, the second gap S2 having an annular shape and being formed between the outer tubular surface 3a and a portion of the tubular portion 32, which faces the outer tubular surface 3a and is not the end 33a of the weir portion 33. Hereinafter, a configuration of the hub seal 1 will be described in detail.

Note that as illustrated in Fig. 1, the outer side is a side in an arrow a direction in the axis line x direction; on the other hand, as illustrated in Fig. 1, the inner side is a side in an arrow b direction in the axis line x direction. In the hub bearing 100 mounted on the vehicle, the outer side is a wheel side, and the inner side is a body side. Further, the radial direction is a direction orthogonal to the axis line x. Further, in the hub bearing 100, the outer periphery side is a side away from the axis line x in the radial direction and is a side in an arrow c direction as illustrated in Fig. 1, and in the hub bearing 100, the inner periphery side is a side close to the axis line x in the radial direction and is a side in an arrow d direction as illustrated in Fig. 1. Further, the axis line x of the hub seal 1 mounted on the hub bearing 100 agrees or generally agrees with the axis line of the hub bearing 100. For convenience of description, the axis line of the hub bearing 100 is set as the axis line x.

For example, as illustrated in Fig. 2, the reinforcement ring 10 is a member formed of metal, has an annular shape having the axis line x as a central axis or a general central axis, and is formed so as to be press-fitted and thereby fitted into the through hole 107 of the outer ring 101 of the hub bearing 100. The reinforcement ring 10 is press-fitted into the outer ring 101, and the seal main body 3 is thereby fixed to the outer ring 101. For example, as illustrated in Fig. 2, the reinforcement ring 10 has a fitting portion 11 having a tubular shape, a lip support portion 12 which bends from an end portion of the fitting portion 11 on the outer side to the inner side and extends to the inner periphery side, and a flange portion 13 which has an annular and plate shape and extends from an end portion of the fitting portion 11 on the inner side to the outer periphery side.

The fitting portion 11 is a cylindrical or generally cylindrical portion having the axis line x as a central axis or generally central axis, for example, and as illustrated in Figs. 1 and 2, in an outer peripheral surface 11a as a peripheral surface on the outer periphery side, the fitting portion 11 is formed to be press-fitted into the inner side opening portion 101a of the outer ring 101 and to be fitted into an inner peripheral surface 101c of the inner side opening portion 101a. The lip support portion 12 has such a shape that in the hub seal 1, the side lip 21, and an intermediate lip 22 and a grease lip 23 which will be described later are arranged in desired positions with respect to the slinger 4, for example. As illustrated in Fig. 2, for example, the lip support portion 12 has a return portion 12a and a lip flange portion 12b. The return portion 12a is a portion which bends from an end of the fitting portion 11 on the outer side and returns to the inner side, for example. The lip flange portion 12b is a portion which has an annular and plate shape and extends from an end of the return portion 12a on the inner side to the inner periphery side, for example. As illustrated in Fig. 2, for example, the flange portion 13 is a portion which has an annular and plate shape and expands in the radial direction while having the axis line x as a center or a general center. The reinforcement ring 10 is formed as an integrated member with a metal plate by a press process or forging, for example, and the fitting portion 11, the lip support portion 12, and the flange portion 13 are portions of the reinforcement ring 10 which is integrally formed of the same material, and are integrally continuous. Examples of the metal material of the reinforcement ring 10 may have stainless steel and SPCC (cold rolled steel sheet).

The elastic body portion 20 is mounted on the reinforcement ring 10 as described above and is integrated with the reinforcement ring 10 so as to cover the reinforcement ring 10 from the inner side as illustrated in Fig. 2, for example. The elastic body portion 20 has the intermediate lip 22 and the grease lip 23, for example, in addition to the side lip 21. Each of the side lip 21, the intermediate lip 22, and the grease lip 23 is a seal lip which is annular around the axis line x. For example, as illustrated in Fig. 2, on the inner periphery side relative to the side lip 21, the intermediate lip 22 extends toward the inner side and contacts the slinger 4. For example, as illustrated in Fig. 2, the grease lip 23 extends from the outer side relative to the intermediate lip 22 and contacts the slinger 4. The side lip 21 and the intermediate lip 22 contact the flange portion 31 of the slinger 4, prevent entry of foreign matter into the gap 100a of the hub bearing 100, and prevent outflow of the lubricant from an inside of the gap 100a. Further, the grease lip 23 prevents outflow of the lubricant from the inside of the gap 100a of the hub bearing 100.

Further, the elastic body portion 20 has a base body portion 24, for example. As illustrated in Fig. 2, each of the intermediate lip 22 and the grease lip 23 extends from an end portion of the base body portion 24 on the inner periphery side. Further, for example, as illustrated in Fig. 2, the side lip 21 is spaced apart from the intermediate lip 22 in the radial direction on the outer periphery side relative to the intermediate lip 22 and extends from the base body portion 24. The base body portion 24 is a portion, of the elastic body portion 20, which expands on a surface of the reinforcement ring 10 on the inner side throughout the flange portion 13, the fitting portion 11, and the lip support portion 12 of the reinforcement ring 10. As illustrated in Figs. 2 and 3, the base body portion 24 has an outer periphery opposing portion 24a as a tubular portion which extends along the fitting portion 11 of the reinforcement ring 10, and the above-described outer tubular surface 3a is formed in the outer periphery opposing portion 24a of the base body portion 24. The outer tubular surface 3a is a cylindrical surface or a generally cylindrical surface which has the axis line x as the central axis or a generally central axis, for example. The outer tubular surface 3a is not limited to a surface which delineates a straight line parallel with the axis line x in a cross section along a plane including the axis line x. The outer tubular surface 3a may be a surface which delineates a straight line inclined with respect to the axis line x, may be a surface which delineates a curve, or may be a surface which delineates a line in which a straight line and a curve are combined, for example, in the cross section along the plane including the axis line x. Specifically, for example, the outer tubular surface 3a may be a conical surface or a generally conical surface which increases in diameter as progresses toward the inner side in the axis line x direction and has the axis line x as a central axis or a generally central axis.

As illustrated in Fig. 2, specifically, for example, the side lip 21 extends from the base body portion 24 toward the inner side in an annular shape while having the axis line x as a central axis or a generally central axis. Further, as illustrated in Fig. 2, the side lip 21 is formed such that in the usage state of the hub seal 1 which is mounted on the hub bearing 100 such that the seal main body 3 and the slinger 4 are set to the predetermined relative positions, a distal end portion of the side lip 21 contacts the flange portion 31 of the slinger 4 while having a predetermined interference. As illustrated in Fig. 2, the side lip 21 has a conical tubular shape or a generally conical tubular shape which increases in diameter as progresses toward the inner side in the axis line x direction, for example.

As illustrated in Fig. 2, specifically, for example, the intermediate lip 22 extends from the base body portion 24 toward the inner side in an annular shape while having the axis line x as a central axis or a generally central axis. Further, the intermediate lip 22 is formed such that in the usage state of the hub seal 1, a distal end portion of the intermediate lip 22 contacts the flange portion 31 of the slinger 4 while having a predetermined interference. The intermediate lip 22 has a conical tubular shape or a generally conical tubular shape which increases in diameter as progresses toward the inner side in the axis line x direction, for example. The intermediate lip 22 may extend in parallel with the side lip 21 or may not be parallel with the side lip 21 as illustrated in Fig. 2, and for example, an inclination with respect to the axis line x may be gentler than that of the side lip 21. Further, conversely, the inclination, with respect to the axis line x, of the intermediate lip 22 may be steeper than that of the side lip 21. For example, as illustrated in Fig. 2, the grease lip 23 extends from the base body portion 24 toward the outer side and the inner periphery side in an annular shape while having the axis line x as a central axis or a generally central axis. The grease lip 23 is formed such that in the usage state of the hub seal 1, a distal end portion contacts a fitting portion 34 of the slinger 4 from the outer periphery side while having a predetermined interference.

Further, for example, as illustrated in Fig. 2, in the elastic body portion 20, an annular protrusion portion 25 is formed. The annular protrusion portion 25 is a protrusion which is provided on the outer periphery side relative to the outer tubular surface 3a, protrudes to the inner side, and is annular around the axis line x. As illustrated in Fig. 2, the annular protrusion portion 25 extends from a portion, of the base body portion 24, along the flange portion 13 of the reinforcement ring 10. As illustrated in Figs. 2 and 3, in the usage state of the hub seal 1, the annular protrusion portion 25 is positioned on the outer periphery side relative to the second gap S2, and an inner side end 25a as a distal end on the inner side is positioned on the inner side relative to an opening S2a of the second gap S2 on the inner side. Further, the annular protrusion portion 25 obliquely protrudes from an end portion of the base body portion 24 on the outer periphery side toward the inner side and the outer periphery side, for example.

Further, for example, as illustrated in Fig. 2, on the outer periphery side relative to the annular protrusion portion 25, the elastic body portion 20 has a gasket portion 26 as an annular portion which protrudes toward the outer side. As illustrated in Fig. 2, the gasket portion 26 is formed so as to contact an outer peripheral surface 101d of the inner side opening portion 101a of the outer ring 101 in the usage state of the hub seal 1. Further, for example, as illustrated in Fig. 2, the gasket portion 26 is formed to cover an end portion, on the outer periphery side, of the flange portion 13 of the reinforcement ring 10. Further, for example, as illustrated in Fig. 2, the elastic body portion 20 has a gasket portion 27 which at least partially covers a surface, on the outer side, of the flange portion 13 of the reinforcement ring 10. The gasket portion 27 expands in an annular shape around the axis line x and is continuous with an end of the gasket portion 26 on the inner side. As illustrated in Fig. 2, the gasket portion 27 is formed so as to contact an inner side end surface 101e of the inner side opening portion 101a of the outer ring 101 in the usage state of the hub seal 1.

The elastic body portion 20 is integrally mounted on the reinforcement ring 10, and the above-described side lip 21, the intermediate lip 22, the grease lip 23, the base body portion 24, an annular protrusion 25, the gasket portion 26, and the gasket portion 27 are portions of the elastic body portion 20 which is integrally formed of the same material, and are integrally continuous. Examples of an elastic body of the elastic body portion 20 may include various rubber materials. Examples of the various rubber materials may include synthetic rubber such as nitrile rubber (NBR), hydrogenated nitrile rubber (H-NBR), acrylic rubber (ACM), fluororubber (FKM). In the base body portion 24, the elastic body portion 20 is mainly integrally mounted on the reinforcement ring 10.

The slinger 4 is a plate-shaped member formed of metal, has a circular ring shape or a generally circular ring shape having the axis line x as a central axis or a general central axis, and is formed so as to be press-fitted into the inner ring member 104 of the inner ring 102 of the hub bearing 100 and to be thereby fitted on the inner ring member 104 as illustrated in Figs. 1 and 2. For example, as illustrated in Fig. 2, the slinger 4 has the fitting portion 34, which is formed to faces the tubular portion 32 via the flange portion 31, in addition to the flange portion 31 and the tubular portion 32.

For example, illustrated in Fig. 2, the fitting portion 34 is a portion that has a cylindrical or generally cylindrical shape having the axis line x as a central axis or a generally central axis, and is formed to be fitted on an outer peripheral surface 104a of the inner ring member 104. Further, for example, as illustrated in Fig. 2, a contact surface 34a as a surface which faces the outer periphery side of the fitting portion 34 is a cylindrical surface or a generally cylindrical surface which has the axis line x as a central axis or a generally central axis. The flange portion 31 is a portion that has a disk shape or a generally disk shape and expands in the radial direction while having the axis line x as a central axis or a generally central axis, and forms an annular portion that protrudes in the radial direction from the outer peripheral surface 104a of the inner ring member 104, as illustrated in Fig. 2. A contact surface 31a as a surface which faces the inner side of the flange portion 31 is a surface which expands in a plane parallel or generally parallel with a plane orthogonal to the axis line x, for example.

As illustrated in Figs. 2 and 3, the tubular portion 32 of the slinger 4 is a portion that has a generally cylindrical shape having the axis line x as a central axis or a generally central axis and extends from the end portion of the flange portion 31 on the outer periphery side to the outer side, for example. As illustrated in Fig. 3, the tubular portion 32 has an inner tubular surface 32a which faces the outer periphery side. The inner tubular surface 32a is a cylindrical surface or a generally cylindrical surface which has the axis line x as a central axis or a generally central axis, for example. In an end portion of the tubular portion 32 on the inner side, as described above, the weir portion 33 is provided which is annular and protrudes to the outer periphery side. For example, as illustrated in Fig. 3, the weir portion 33 is provided on the outer side of the inner tubular surface 32a and is connected to an end of the inner tubular surface 32a on the outer side. As illustrated in Fig. 3, the weir portion 33 protrudes to the outer periphery side relative to the inner tubular surface 32a and has a weir surface 33b between the end 33a and the inner tubular surface 32a. The weir surface 33b is a surface which extends from the end 33a to the inner periphery side, is annular around the axis line x, and faces the inner side. Further, as illustrated in Fig. 3, the weir portion 33 has a side surface 33c as an annular surface which faces the outer side. The side surface 33c is a surface which faces away from the weir surface 33b. The end 33a of the weir portion 33 is a distal end of the weir portion 33, is an annular surface which faces the outer periphery side, for example, as illustrated in Fig. 3, and is specifically a cylindrical or a generally cylindrical surface which has the axis line x as a central axis or a generally central axis, for example. Further, specifically, for example, each of the weir surface 33b and the side surface 33c is a surface which expands in a plane parallel or generally parallel with a plane orthogonal to the axis line x.

As illustrated in Fig. 3, the end 33a of the weir portion 33 faces, in the radial direction from the inner periphery side, the outer tubular surface 3a of the seal main body 3, and the first gap S1 which is annular is formed between the end 33a of the weir portion 33 and the outer tubular surface 3a. Further, as illustrated in Fig. 3, the inner tubular surface 32a of the tubular portion 32 faces, in the radial direction from the inner periphery side, the outer tubular surface 3a, and the second gap S2 which is annular is formed between the inner tubular surface 32a of the tubular portion 32 and the outer tubular surface 3a. As illustrated in Fig. 3, the outer tubular surface 3a faces the end 33a of the weir portion 33 and the whole inner tubular surface 32a of the tubular portion 32 in the radial direction. Note that the outer tubular surface 3a may face the end 33a of the weir portion 33 and a part of the inner tubular surface 32a of the tubular portion 32 in the radial direction.

As illustrated in Fig. 3, a width of the first gap S1 in the radial direction is set as a width W1. On the other hand, a width of the second gap S2 in the radial direction is set as a width W2. The width W1 of the first gap S1 is narrower than the width W2 of the second gap S2. Note that a width of a gap is a predetermined value such as a width in a specific position of the gap (such as a position where the gap becomes a maximum or a minimum) or an average value of widths of gaps in a predetermined number of positions, for example. Further, as illustrated in Fig. 3, a length of the first gap S1 in the axis line x direction is set as a length L1. On the other hand, a length of the second gap S2 in the axis line x direction is set as a length L2. The length L1 of the first gap S1 corresponds to a width of the end 33a in the axis line x direction, and the length L1 of the first gap S1 and this width of the end 33a are the same value. On the other hand, the length L2 of the second gap S2 corresponds to a width of the inner tubular surface 32a in the axis line x direction, and the length L2 of the second gap S2 and this width of the inner tubular surface 32a are the same value.

Specifically, the width W1 and the length L1 of the first gap S1 are set to such width and length that a labyrinth seal is formed to be opposed to liquid foreign matter. Thus, the first gap S1 serves as a labyrinth gap S1. Note that liquid foreign matter is liquid foreign matter such as rain water, muddy water, or rain water or muddy water which contains dust. The labyrinth seal formed with a gap causes a resistance action which hinders entry of liquid foreign matter into the gap and serves as resistance against entry of liquid foreign matter into the gap. The width W1 and the length L1 of the labyrinth gap S1 are set to values that cause the above-described resistance action against liquid foreign matter to which the hub seal 1 is assumed to be exposed in accordance with an application target of the hub seal 1. The width W1 and the length L1 of the labyrinth gap S1 are set based on physical properties of liquid foreign matter to which the hub seal 1 is assumed to be exposed in accordance with the application target of the hub seal 1, for example. The physical properties of the liquid foreign matter are viscosity and surface tension that the liquid foreign matter has, the size of solid foreign matter contained in the liquid foreign matter, and so forth, for example. The above-described resistance action can be checked by an experiment or the like in a simulated state of the usage state of the hub seal 1, for example.

On the other hand, the width W2 and the length L2 of the second gap S2 are set to such width and length that the labyrinth seal is not formed against liquid foreign matter. The second gap S2 is capable of discharging, from the second gap S2, liquid foreign matter flowing into the second gap S2, and the second gap S2 serves as a discharge gap S2. Specifically, as described above, the discharge gap S2 is demarcated by the inner tubular surface 32a of the tubular portion 32, the weir surface 33b of the weir portion 33, the labyrinth gap S1, and the outer tubular surface 3a, and in a downstream portion of a flow of foreign matter flowing into the discharge gap S2, the discharge gap S2 is blocked by the weir surface 33b and the labyrinth gap S1. Thus, the foreign matter flowing into the discharge gap S2 mainly moves to a downstream side along the inner tubular surface 32a of the tubular portion 32 and is rebounded by the weir surface 33b and the labyrinth gap S1. Further, the width W2 and the length L2 of the discharge gap S2 are set to such width and length that the labyrinth seal against liquid foreign matter is not formed. Specifically, the width W2 and the length L2 of the discharge gap S2 are set to such values that liquid foreign matter rebounded by the weir surface 33b and the labyrinth gap S1 can flow toward the opening S2a of the discharge gap S2. It is preferable that the width W2 and the length L2 of the discharge gap S2 be set to values that can inhibit the liquid foreign matter rebounded by the weir surface 33b and the labyrinth gap S1 from interfering with foreign matter which flows into the discharge gap S2 and moves to the downstream side. Thus, the discharge gap S2 has a discharge action for discharging the liquid foreign matter that flows into the discharge gap S2 and is rebounded by the weir surface 33b and the labyrinth gap S1, from the opening S2a to an outside of the discharge gap S2. The discharge gap S2 exhibits the discharge action also for foreign matter that is not liquid foreign matter. Note that the discharge gap S2 may not exhibit the discharge action for foreign matter that is not liquid foreign matter. This discharge action can be checked by an experiment or the like in a simulated state of the usage state of the hub seal 1, for example.

As illustrated in Fig. 3, the side surface 33c of the weir portion 33 faces, in the axis line x direction from the inner side, an opposing portion 24b as a portion of the base body portion 24, which extends along the lip flange portion 12b of the reinforcement ring 10, and the gap S3 which is annular is formed between the side surface 33c of the weir portion 33 and the opposing portion 24b of the base body portion 24. The gap S3 communicates with the labyrinth gap S1. Similarly to the labyrinth gap S1, for example, the gap S3 is a gap which forms the labyrinth seal against liquid foreign matter. Specifically, for example, the width W3 in the axis line x direction and the length L3 in the radial direction, of the gap S3, are set to width and length which form the labyrinth seal against liquid foreign matter. Note that the length L3 of the gap S3 corresponds to a width of the side surface 33c in the radial direction, and the length L3 of the gap S3 and this width of the side surface 33c are the same value. In this case, the labyrinth gap S1 and the gap S3 forms one labyrinth seal. Note that the gap S3 may be a gap which does not form the labyrinth seal against liquid foreign matter.

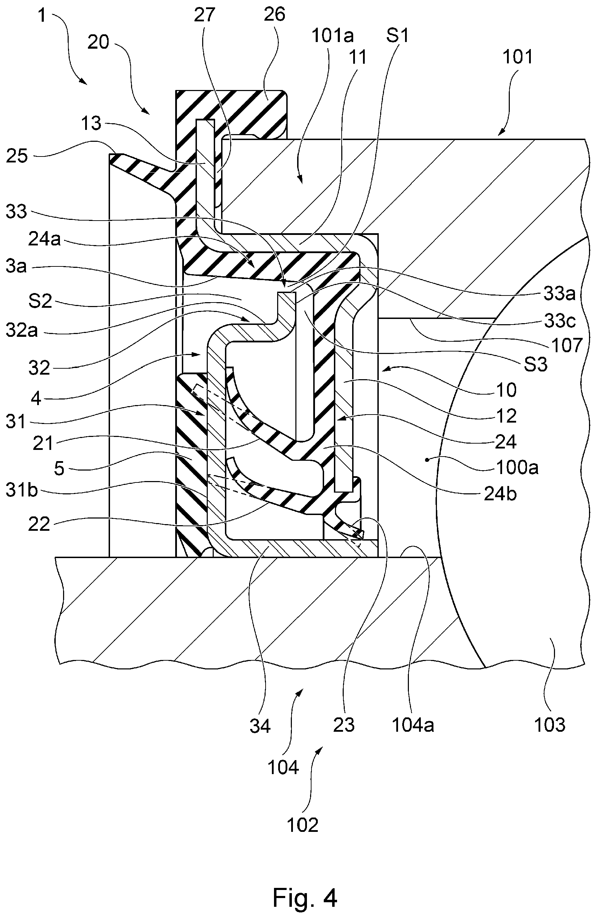

Further, the slinger 4 tightly fits the inner ring member 104. Specifically, the fitting portion 34 of the slinger 4 and the inner ring member 104 tightly fit each other such that a gap through which foreign matter is capable of passing is not formed between the fitting portion 34 and the inner ring member 104. Note that the slinger 4 and the inner ring member 104 may not tightly fit each other as described above. In this case, for example, an annular gasket may be provided between the slinger 4 and the inner ring member 104 such that foreign matter does not enter the gap 100a between the outer ring 101 and the inner ring 102 through a gap between the slinger 4 and the inner ring member 104. For example, as illustrated in Fig. 4, a gasket 5 which is annular, is formed with an elastic body, and contacts the outer peripheral surface 104a of the inner ring member 104 may be provided on an inner peripheral surface 31b of the flange portion 31 of the slinger 4. Further, the gasket 5 may be caused to have a function of an encoder. In this case, as illustrated in Fig. 4, in the hub seal 1, in the axis line x direction, the gasket 5 is covered by the outer tubular surface 3a from the outer periphery side. Note that in the hub seal 1, in the axis line x direction, the gasket 5 may not be covered by the outer tubular surface 3a from the outer periphery side but may protrude to the inner side relative to the outer tubular surface 3a.

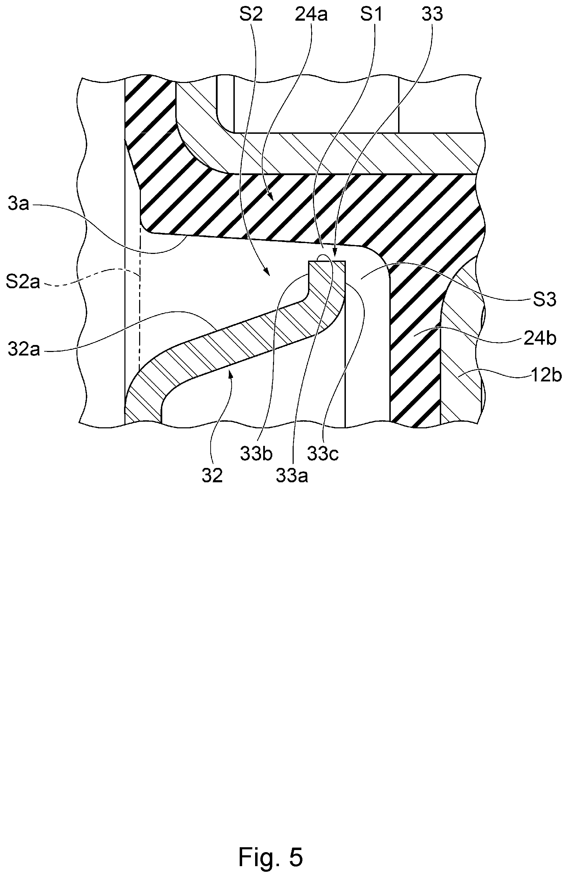

Further, as illustrated in Fig. 5, the inner tubular surface 32a of the tubular portion 32 of the slinger 4 may extend while being inclined with respect to the axis line x direction. Specifically, for example, as illustrated in Fig. 5, the tubular portion 32 of the slinger 4 forms a circular truncated cone shape. In other words, as illustrated in Fig. 5, the tubular portion 32 of the slinger 4 may be a conical tubular portion or a generally conical tubular portion which increases in diameter as progresses toward the outer side in the axis line x direction, and the inner tubular surface 32a may be a conical surface or a generally conical surface which has the axis line x as a central axis or a generally central axis and increases in diameter as progresses toward the outer side in the axis line x direction. Thus, when the tubular portion 32 of the slinger 4 has a circular truncated cone shape and the inner tubular surface 32a of the tubular portion 32 is a conical surface which increases in diameter from the flange portion 31 toward the outer side, the discharge action of the discharge gap S2 can be made stronger.

The slinger 4 is integrally formed with a metal plate having a uniform thickness by a press process or forging, for example, and the tubular portion 32, the flange portion 31, and the fitting portion 34 are portions of the slinger 4 which is integrally formed. Examples of a metal material of the slinger 4 may include stainless steel and SPCC (Steel Plate Cold Commercial). The end portion of the tubular portion 32 on the outer side is bent, for example, and the weir portion 33 is thereby formed.

The hub seal 1 has the above-described configuration, and the labyrinth gap S1 having the resistance action against entry of liquid foreign matter is provided on an upstream side of the side lip 21 in a path which starts from the opening S2a of the discharge gap S2 and reaches a space 100a of the hub bearing 100. Thus, the hub seal 1 can inhibit liquid foreign matter from reaching a contact portion between the side lip 21 and the flange portion 31 of the slinger 4. Further, on the upstream side of the labyrinth gap S1, the discharge gap S2 is provided which has the discharge action for liquid foreign matter. In this regard as well, the hub seal 1 can inhibit liquid foreign matter from reaching the contact portion between the side lip 21 and the flange portion 31 of the slinger 4. Further, in a case where the gap S3 forms the labyrinth seal, the gap S3 can also inhibit liquid foreign matter from reaching the contact portion between the side lip 21 and the flange portion 31 of the slinger 4 in the hub seal 1.

As described above, in the hub seal 1, liquid foreign matter is inhibited from reaching the contact portion between the side lip 21 and the flange portion 31 of the slinger 4, and the side lip 21 is inhibited from being exposed to liquid foreign matter. Thus, liquid foreign matter is inhibited from reaching a contact portion between the intermediate lip 22 and the flange portion 31 of the slinger 4, and the intermediate lip 22 is inhibited from being exposed to liquid foreign matter. Accordingly, sealing performance of the side lip 21 and the intermediate lip 22 against liquid foreign matter can be improved.

Thus, the hub seal 1 according to the present embodiment can improve sealing performance against liquid foreign matter.

Further, the labyrinth gap S1, the discharge gap S2, and the gap S3 inhibit entry of liquid foreign matter without causing the seal main body 3 and the slinger 4 to contact each other and improve sealing performance of the hub seal 1 against liquid foreign matter. In other words, the hub seal 1 can improve sealing performance of the hub seal 1 against liquid foreign matter without increasing torque resistance.

Further, as described above, the labyrinth gap S1, the discharge gap S2, and the gap S3 inhibit liquid foreign matter from reaching the contact portion between each of the side lip 21 and intermediate lip 22, and the flange portion 31 of the slinger 4. Thus, there are cases where necessary sealing performance can be maintained even when an interference of the side lip 21 for the flange portion 31 is reduced, and there are cases where necessary sealing performance can be maintained even when an interference of the intermediate lip 22 for the flange portion 31 is reduced. Thus, there are cases where the hub seal 1 can reduce torque resistance while maintaining necessary sealing performance.

Further, as described above, the hub seal 1 has the annular protrusion portion 25, and foreign matter is less likely to enter the discharge gap S2.

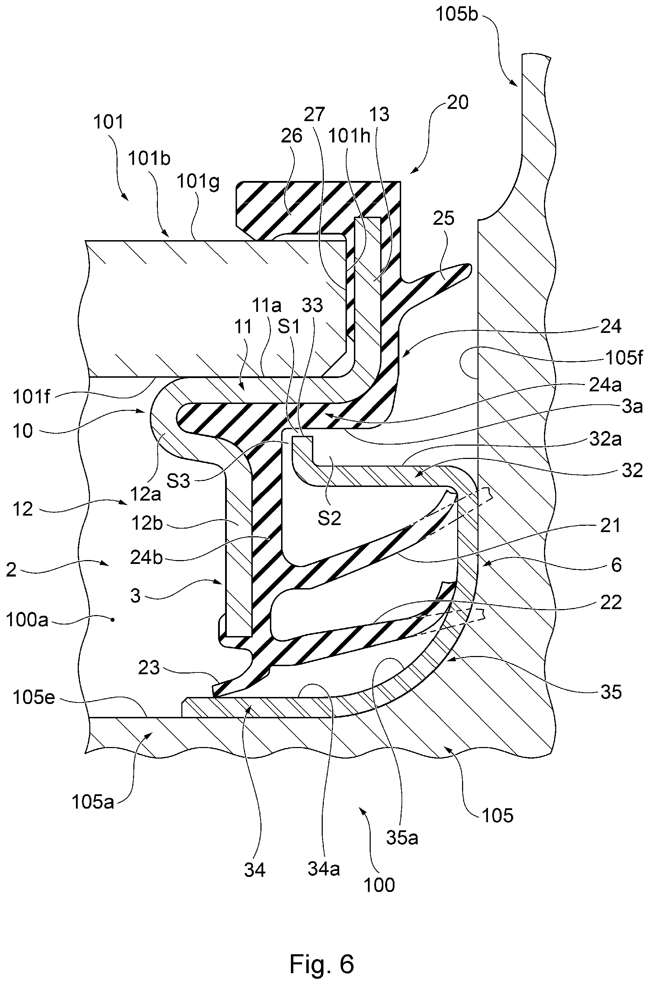

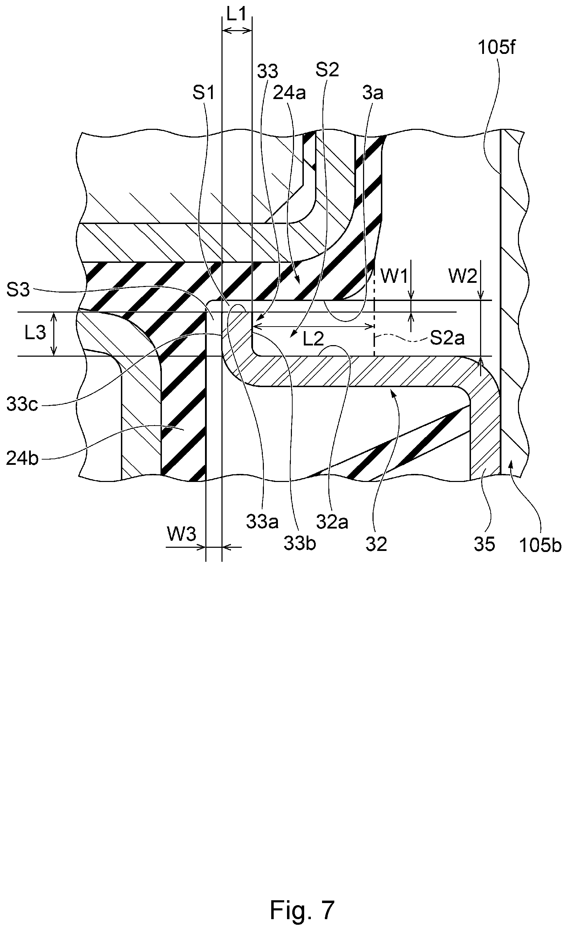

Next, a hub seal 2 according to the second embodiment of the present invention will be described. Fig. 6 is a partially enlarged cross-sectional view of the vicinity of the hub seal 2 in Fig. 1, and Fig. 7 is a partially enlarged cross-sectional view of the hub seal 2 in Fig. 6. One side of a cross section of the hub seal 2 with respect to the axis line x is illustrated in Fig. 6. Compared to the above-described hub seal 1, the hub seal 2 is mainly different in a shape of a slinger. Hereinafter, as for configurations of the hub seal 2, the same reference characters are given to the same configurations as those of the above-described hub seal 1 and configurations having similar functions, descriptions thereof will be omitted, and different configurations will be described.

As illustrated in Figs. 1 and 6, the hub seal 2 is an outer-side hub seal and is mounted between the outer side opening portion 101b of the outer ring 101 of the hub bearing 100 and the hub ring 105. Thus, as for the configurations of the hub seal 2 mounted on the hub bearing 100, compared to the corresponding configurations of the hub seal 1 mounted on the hub bearing 100, the inner side corresponds to the outer side, the outer side corresponds to the inner side, and orientations in the axis line x direction are opposite. As illustrated in Fig. 6, the hub seal 2 has the seal main body 3 and has a slinger 6. The slinger 6 is different from the slinger 4 mainly in the point that the slinger 6 has a flange portion 35 having a different shape from that of the flange portion 31 of the slinger 4 of the hub seal 1. Compared to the seal main body 3 of the hub seal 1, the seal main body 3 of the hub seal 2 has different specific dimensions and shapes in accordance with a structure of a portion of the hub bearing 100, on which the seal main body 3 of the hub seal 2 is mounted. Similarly, compared to the slinger 4 of the hub seal 1, the slinger 6 of the hub seal 2 has different specific dimensions and shapes in accordance with a structure of a portion of the hub bearing 100, on which the slinger 6 of the hub seal 2 is mounted.

As illustrated in Figs. 6 and 7, the reinforcement ring 10 of the hub seal 2 is formed by being press-fitted into the through hole 107 of the outer ring 101 of the hub bearing 100 and thereby fitted therein and is formed such that the fitting portion 11 is press-fitted into the outer side opening portion 101b of the outer ring 101 and is thereby fitted into an inner peripheral surface 101f of the outer side opening portion 101b, for example.

As illustrated in Fig. 6, each of the side lip 21 and the intermediate lip 22 of the hub seal 2 extends from the base body portion 24 toward the outer side. Each of the side lip 21 and the intermediate lip 22 is formed such that in a usage state of the hub seal 2 which is mounted on the hub bearing 100 such that the seal main body 3 and the slinger 6 are set to predetermined relative positions, a distal end portion of each of the side lip 21 and the intermediate lip 22 contacts the flange portion 35 of the slinger 6 while having a predetermined interference. The grease lip 23 extends from the base body portion 24 toward the inner side and the inner periphery side. The grease lip 23 is formed such that in the usage state of the hub seal 2, the distal end portion contacts the fitting portion 34 of the slinger 6 from the outer periphery side while having a predetermined interference.

Further, the annular protrusion portion 25 protrudes to the outer side as illustrated in Fig. 6 and obliquely protrudes from an end portion of the base body portion 24 on the outer periphery side toward the outer side and the outer periphery side, for example. Further, for example, as illustrated in Fig. 6, the annular protrusion portion 25 is formed such that in the usage state of the hub seal 2, a distal end of the annular protrusion portion 25 faces, with a gap, a side surface 105f of the wheel-mounting flange 105b. As illustrated in Fig. 6, the gasket portion 26 of the hub seal 2 is formed so as to contact an outer peripheral surface 101g of an outer side opening portion 101 of the outer ring 101 in the usage state of the hub seal 2. As illustrated in Fig. 6, the gasket portion 27 of the hub seal 2 is formed so as to contact an outer side end surface 101h of the outer side opening portion 101b of the outer ring 101 in the usage state of the hub seal 2.

The slinger 6 is a plate-shaped member formed of metal, has a circular ring shape or a generally circular ring shape having the axis line x as a central axis or a general central axis, and is formed so as to be press-fitted into the hub ring 105 of the inner ring 102 of the hub bearing 100 and to be thereby fitted on the hub ring 105 as illustrated in Fig. 6. For example, illustrated in Fig. 6, the fitting portion 34 of the slinger 6 is formed to be fitted on an outer peripheral surface 105e of the shaft portion 105a of the hub ring 105.

As illustrated in Fig. 6, the flange portion 35 of the slinger 6 has a shape corresponding to the side surface 105f around a root of the wheel-mounting flange 105b of the hub ring 105. For example, as illustrated in Fig. 6, a cross-sectional shape of the flange portion 35 along a plane including the axis line x has a shape which is convex to the inner periphery side and is smoothly bent. Further, a shape of a cross section of a contact surface 35a of the flange portion 35, as a surface facing the inner side and the outer periphery side, along a plane including the axis line x has a curved shape which is convex to the outer side and the inner periphery side and is smoothly bent, and the contact surface 35a of the flange portion 35 is smoothly connected to the contact surface 34a of the fitting portion 34.

As illustrated in Figs. 6 and 7, the tubular portion 32 of the slinger 6 extends from an end portion of the flange portion 35 on the outer periphery side to the inner side, for example. As illustrated in Figs. 6 and 7, the tubular portion 32 has the weir portion 33, in the hub seal 2 as well, the end 33a of the weir portion 33 faces, in the radial direction from the inner periphery side, the outer tubular surface 3a of the seal main body 3, and the labyrinth gap S1 which is annular is formed between the end 33a of the weir portion 33 and the outer tubular surface 3a. Further, as illustrated in Figs. 6 and 7, the inner tubular surface 32a of the tubular portion 32 faces, in the radial direction from the inner periphery side, the outer tubular surface 3a, and the discharge gap S2 is formed between the inner tubular surface 32a of the tubular portion 32 and the outer tubular surface 3a. As illustrated in Fig. 6, in the hub seal 2, the outer tubular surface 3a faces the end 33a of the weir portion 33 and a part of the inner tubular surface 32a of the tubular portion 32 in the radial direction. Note that the outer tubular surface 3a may face the end 33a of the weir portion 33 and the whole inner tubular surface 32a of the tubular portion 32 in the radial direction.

Further, as illustrated in Figs. 6 and 7, the side surface 33c of the weir portion 33 of the hub seal 2 faces the inner side, the side surface 33c faces, in the axis line x direction from the outer side, the opposing portion 24b of the base body portion 24, and the gap S3 which is annular is formed between the side surface 33c of the weir portion 33 and the opposing portion 24b of the base body portion 24.

As illustrated in Fig. 7, in the hub seal 2 as well, a width in the radial direction and a length in the axis line x direction, of the labyrinth gap S1, are respectively set to the width W1 and the length L1, and the labyrinth gap S1 exhibits the resistance action against liquid foreign matter. Further, a width in the radial direction and a length in the axis line x direction, of the discharge gap S2, are respectively set to the width W2 and the length L2, and the discharge gap S2 does not form the labyrinth seal against liquid foreign matter and has the discharge action for discharging the liquid foreign matter that flows into the discharge gap S2 and is rebounded by the weir surface 33b and the labyrinth gap S1, from the opening S2a to the outside of the discharge gap S2. Further, a width in the axis line x direction and a length in the radial direction, of the gap S3, are set to the width W3 and the length L3, and the gap S3 is a gap which forms the labyrinth seal against liquid foreign matter. Note that the gap S3 may be a gap which does not form the labyrinth seal against liquid foreign matter.

As described above, the hub seal 2 has a similar configuration to that of the hub seal 1 and acts similarly to the hub seal 1.

Thus, the hub seal 2 according to the present embodiment can improve sealing performance against liquid foreign matter.

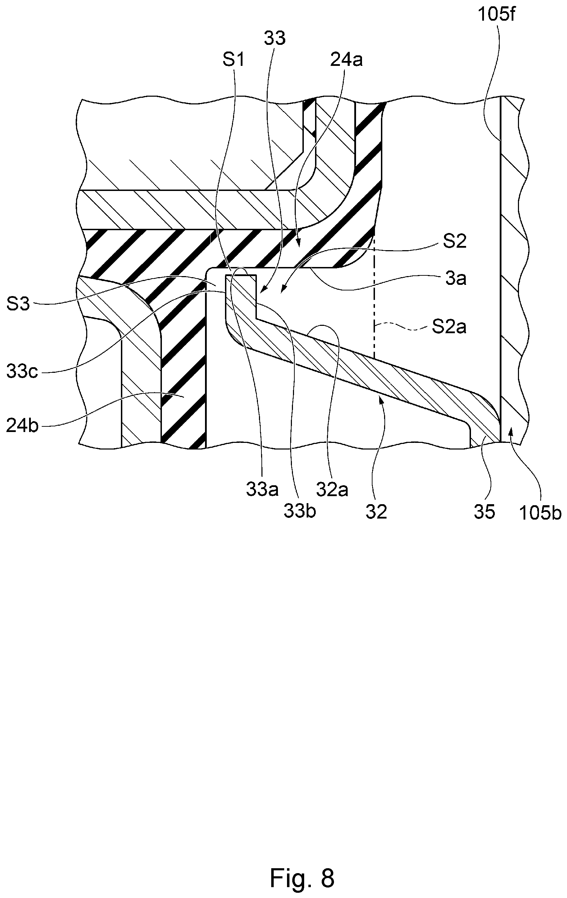

Note that similarly to the hub seal 1, as illustrated in Fig. 8, in a cross section, the inner tubular surface 32a of the tubular portion 32 of the slinger 6 may extend while being inclined with respect to the axis line x direction. Specifically, for example, as illustrated in Fig. 8, the tubular portion 32 of the slinger 6 forms a circular truncated cone shape. In other words, as illustrated in Fig. 8, in a cross section, the tubular portion 32 of the slinger 6 may be a conical tubular portion or a generally conical tubular portion which increases in diameter as progresses toward the inner side in the axis line x direction, and the inner tubular surface 32a may be a conical surface or a generally conical surface which has the axis line x as a central axis or a generally central axis and increases in diameter as progresses toward the inner side in the axis line x direction. Thus, when the tubular portion 32 of the slinger 6 has a circular truncated cone shape and the inner tubular surface 32a of the tubular portion 32 is a conical surface which is inclined to the outer periphery side from the flange portion 31 toward the inner side, the discharge action of the discharge gap S2 can be made stronger.

In the foregoing, the present invention is described based on the above embodiments, but the technical scope of the present invention is not limited to the scope described in the above embodiments. It is clear for a person skilled in the art that various changes or improvements can be applied to the above embodiments. It is clear from descriptions of the claims that forms in which such changes or improvements are applied can be included in the technical scope of the present invention.

The embodiments described in the foregoing are for facilitating understanding of the present invention but are not for limited interpretation of the present invention. Further, the above-described embodiments do not limit use targets for which the present invention is used, and the present invention can include all articles as the use targets thereof. Each configuration element provided in the above embodiments and its arrangement, material, condition, shape, size, and so forth are not limited to those raised as examples and can appropriately be changed. For example, the present invention includes differences that occur in practice such as tolerance in manufacture. Further, within the scope in which no technical contradiction occurs, the configuration elements mentioned in the different embodiments can partially be substituted or combined. Further, configurations can appropriately selectively be combined such that at least a part of the above-described objects and effects are achieved.

For example, the outer tubular surface 3a is formed with the fitting portion 11 of the reinforcement ring 10. In this case, the base body portion 24 of the elastic body portion 20 does not have the outer periphery opposing portion 24a. Further, for example, the elastic body portion 20 of each of the hub seals 1 and 2 may not have the annular protrusion portion 25, may not have the gasket portion 26, or may not have the gasket portion 27. Further, for example, in a case where the elastic body portion 20 does not have the annular protrusion portion 25, the gasket portion 26, or the gasket portion 27, the reinforcement ring 10 of each of the hub seals 1 and 2 may not have the flange portion 13.

### Reference Signs List

- 1, 2: hub seal (sealing device)
- 3: seal main body (sealing device main body)
- 3a: outer tubular surface
- 4, 6: slinger
- 5: gasket
- 10: reinforcement ring
- 11: fitting portion
- 11a: outer peripheral surface
- 12: lip support portion
- 12a: return portion
- 12b: lip flange portion
- 13: flange portion
- 20: elastic body portion
- 21: side lip
- 22: intermediate lip
- 23: grease lip
- 24: base body portion
- 24a: outer periphery opposing portion
- 24b: opposing portion
- 25: annular protrusion portion
- 25a: inner side end
- 26, 27: gasket portion
- 31, 35: flange portion (circular ring portion)
- 31a, 35a: contact surface
- 31b: inner peripheral surface
- 32: tubular portion
- 32a: inner tubular peripheral surface
- 33: weir portion
- 33a: end
- 33b: weir surface
- 33c: side surface
- 34: fitting portion
- 34a: contact surface
- 100: hub bearing
- 100a: gap
- 101: outer ring
- 101a: inner side opening portion
- 101b: outer side opening portion
- 101c: inner peripheral surface
- 101d: outer peripheral surface
- 101e: inner side end surface
- 101f: inner peripheral surface
- 101g: outer peripheral surface
- 101h: outer side end surface
- 102: inner ring
- 103: bearing ball
- 104: inner ring member
- 104a: outer peripheral surface
- 105: hub ring
- 105a: shaft portion
- 105b: wheel-mounting flange
- 105c: transition portion
- 105d: inner peripheral surface
- 105e: outer peripheral surface
- 105f: side surface
- 106: retainer
- 107: through hole
- G: grease
- L1, L2, L3: length
- S1: labyrinth gap (first gap)
- S2: discharge gap (second gap)
- S2a: opening
- S3: gap
- x: axis line
- W1, W2, W3: width

## Claims

1. A sealing device for sealing a gap between an outer periphery side member and an inner periphery side member which is at least partially surrounded by the outer periphery side member, the outer periphery side member and the inner periphery side member being relatively rotatable with respect to each other about an axis line, the sealing device comprising:
a sealing device main body that is fixed to the outer periphery side member; and
a slinger that is fixed to the inner periphery side member, wherein
the sealing device main body includes a reinforcement ring that is annular around the axis line and an elastic body portion that is mounted on the reinforcement ring and is formed with an elastic body which is annular around the axis line,
the slinger includes a circular ring portion as a portion which is annular around the axis line and extends in a radial direction and a tubular portion as a portion which has a tubular shape and extends along the axis line from an end portion of the circular ring portion on an outer periphery side toward one side in the axis line direction,
an outer tubular surface as a tubular surface which is annular around the axis line and extends along the axis line is formed in the sealing device main body,
the elastic body portion has a side lip, which extends toward another side in the axis line direction and contacts the slinger, on an inner periphery side relative to the outer tubular surface,
the tubular portion of the slinger is positioned on the outer periphery side relative to the side lip,
the tubular portion of the slinger has, in an end portion on the one side, a weir portion as an annular portion which extends toward the outer periphery side,
the outer tubular surface of the sealing device main body faces, from the outer periphery side, at least a part of the tubular portion of the slinger which includes an end of the weir portion, and
between the outer tubular surface and the end of the weir portion, a first gap is formed which is narrower than a width of a second gap in the radial direction, the second gap being provided between the outer tubular surface and a portion of the tubular portion, which faces the outer tubular surface and is not the end of the weir portion.

2. The sealing device according to claim 1, wherein
the width of the first gap in the radial direction is set to a width which forms a labyrinth seal against liquid foreign matter, and
the width of the second gap in the radial direction is set to a width which does not form the labyrinth seal against the liquid foreign matter.

3. The sealing device according to claim 1, configured to enable foreign matter flowing into the second gap to be discharged from the second gap.

4. The sealing device according to claim 3, wherein
the weir portion has a weir surface as a surface which extends from the end to the inner periphery side, is annular around the axis line, and faces the other side, and
the tubular portion has an inner tubular surface as a tubular surface which extends from an end of the weir surface on the inner periphery side to the other side and faces the outer periphery side.

5. The sealing device according to claim 4, wherein
the inner tubular surface of the tubular portion increases in diameter as progresses toward the one side in the axis line direction.

6. The sealing device according to claim 1, wherein
the end of the weir portion is a surface which is annular around the axis line and faces the outer periphery side.

7. The sealing device according to claim 1, wherein
the elastic body portion forms the outer tubular surface.

8. The sealing device according to claim 1, wherein
the elastic body portion has an intermediate lip, which extends toward the slinger, on the inner periphery side relative to the side lip.

9. The sealing device according to claim 8, wherein
the elastic body portion has a grease lip which extends from the one side relative to the intermediate lip and contacts the slinger.

10. The sealing device according to claim 1, wherein
the one side is an inner side, and
the sealing device is an outer-side sealing device.

11. The sealing device according to claim 1, wherein
the one side is an outer side, and
the sealing device is an inner-side sealing device.
